# EUROPEAN PATENT SPECIFICATION

(11) **EP 0 726 858 B1**
(45) Date of publication and mention of the grant of the patent: **27.05.1998**
(21) Application number: 95902328.4
(22) Date of filing: 01.11.1994
(51) Int. Cl.: B62B 3/00, B65D 19/38

(54) **BOX-LIKE TRANSPORT CONTAINER**
DOSENFÖRMIGER TRANSPORTBEHÄLTER
RECIPIENT DE TRANSPORT EN FORME DE BOITE

(30) Priority: 05.11.1993 NL 9301930
(43) Date of publication of application: 21.08.1996
(73) Proprietor: Vorstenbosch, Albertus Franciscus, NL-3218 VP Heenvliet (NL)
(72) Inventor: Vorstenbosch, Albertus Franciscus, NL-3218 VP Heenvliet (NL)
(74) Representative: Schumann, Bernard Herman Johan
(86) International application number: PCT/NL94/00266
(87) International publication number: WO 95/12513

(56) References cited:
- EP-A- 0 008 769
- FR-A- 2 075 836
- GB-A- 2 052 663
- US-A- 5 131 450
- US-A- 5 199 729

## Description

The invention relates to a box-like transport container.

In the transport of vulnerable or sensitive products in an existing box-like transport container it is often desired to cover off one or more open sides of the box-like transport container which may be present. An example hereof is the protecting of open roller containers for transport of plants and/or flowers. The protecting of such a transport container takes place by wrapping it with a plastic wrapping foil. Such a screening protects the contents of the transport container in the desired way. The arranging of the wrapping foil prior to transport and removal of the wrapping foil after transport has taken place are labour-intensive. The wrapping foil is damaged during removal such that it is only suitable for once-only use. The removed wrapping foil has an adverse impact on the environment.

The British patent application GB-A-2052663 describes a method and apparatus for tensioning a curtain on a transport vehicle for a transport container. This application describes the problem of tensioning a curtain in a closed position. The problem is solved by rotatable holding means, holding one side of the curtain. The holding means are placed in an excentric position in relation to the rotation axis of the rotation means. By turning with a handle the rotation axis, the relative position of the holding means changes, so the curtain can be tensioned in the closed position. Opening and closing of the curtain requires both sides of the curtain to be connected or released with the transport container and the apparatus for tensioning the curtain. This involves a lot of work. Another disadvantage of the apparatus in accordance with the invention is that the curtain when the container is in an open position is separated from the container. This requires extra handling of the curtain separated from the container.

The object of the present invention is to provide an improved box-like transport container with at least one in any case partially open side, the contents of which can be screened off and made accessible again in simple manner and wherein further the screening material is reusable.

The present invention provides for this purpose a box-like transport container having at least one at least partially open side and flexible covering means comprising a rotatable mechanism and screen material, offering an open position, the screen material at least partially leaving free the open side, and a closed position, the screen material at least partially covering the open side, and one side of the screen material being connected with the rotatable mechanisme to bias the screen material in the closed position, characterized in that the rotatable mechanism comprises a rotatable core or shaft on which the screen material in the open position is rolled by a bias in the direction of the rolled-up situation of the screen material under which the screen core stands.

This transport container enables simple screening and re-accessing of the contents of the transport container and can furthermore be used a number of times. For this reason the transport container in accordance with the invention is economical and environmental friendly.

The US patent US-A-5199729 shows a stowable shelf bag cart provided with curtains hanging from laterial brace members. These curtains can be opened and closed like household curtains. A disadvantage of the curtains in accordance with this invention is that they can not be tensioned and for this reason require a lot of space both in open and closed position. The curtains need furthermore be made of a material which can not easily be damaged like for instance vinyl. This enhances the weight of the curtains and also makes the curtains more voluminous.

In a preferred embodiment the covering means comprise a profile accommodating the rotatable core, and, in rolled-up situation, also accommodating at least part of the screen material. The profile protects the rotatable core and in rolled-up position of the screen material also the screen material.

The covering means are preferably located close to an upright of the transport container e.g. by detachably connecting them with an upright of the transport container. The axis to the transport container is not disturbed by the covering means and it is easy to convert a standard transport container in a transport container in accordance with the invention by making the covering means detachably connectable. Also the covering means itself isolated from the transport container form part of the invention.

The rotatable core can be placed in a substantial vertical or a horizontal position dependent from the shape of the container and the required use of the container.

The screen material can in a preferred embodiment be made moistureproof. If moistureproof the container can be used for transport of goods that contain fluids and/or the container can withstand a wet environment. Furthermore the sheet material can be made of a material capable of accepting print. Such a material is for instances "Tyvek", a registered trademark from Dupont.

In another preferred embodiment the covering means comprise at least two axially positioned independently rotatable cores of shafts, each core or shaft connected with a different screen. This enhances the flexibility of the covering means in partially closing and opening the transport container.

The invention will be further elucidated with reference to the non-limitative embodiment of the transport container shown in the following figures, wherein:
fig. 1 shows a perspective view of a partly cut away transport container with two roll-up protective screens, one in open and one in closed position;
fig. 2 is a perspective view of a box-like transport container with four closed roll-up protective screens;
fig. 3 shows a perspective view of a partly cut away roll-up mechanism for two protective screens;
fig. 4 is a perspective view of a mounting to an upright of an at least partly closed protective screen;
fig. 5 is a perspective view of a rolled-up protective screen;
fig. 6 is a perspective view of an alternative mounting to an upright of an at least partly closed protective screen; and
fig. 7 is a perspective view of a mounting of a roll-up mechanism of a protective screen to a partly cut away upright.

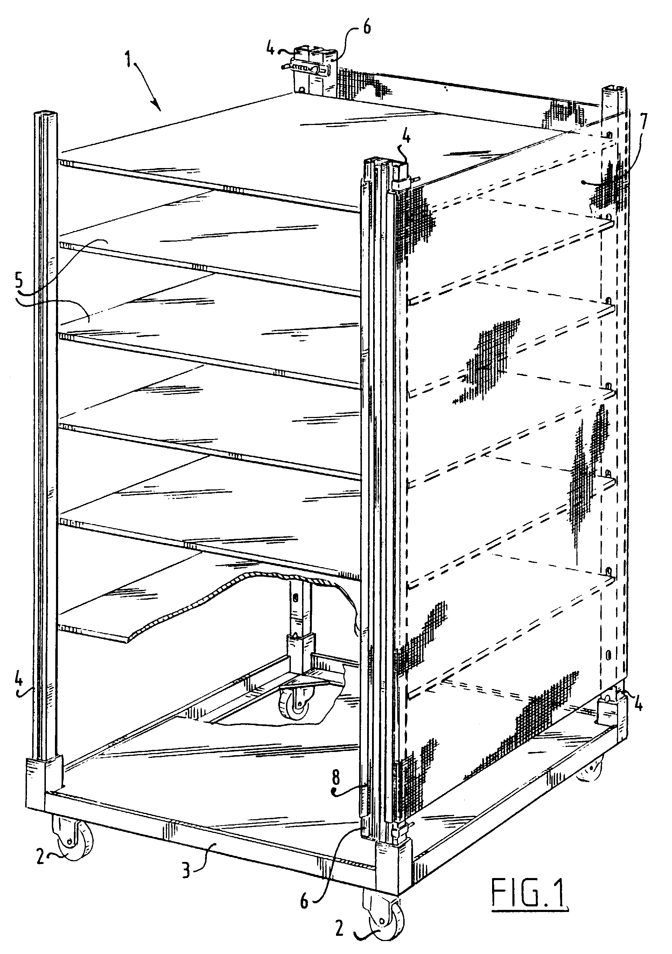

A box-like transport container 1 as shown in fig. 1 consists of a base tray 3 which is provided with wheels 2 and in which are inserted detachable uprights 4. Shelves 5 for carrying products (not shown) are fixed between the uprights 4. Fixed to two of the uprights 4 are tubular profiles 6 in which is received a roll-up mechanism which is not visible in this figure. A one screen 7 covers two of the sides of transport container 1, that is, screen 7 is shown in the closed position. A second screen 8 is shown in an opened or rolled-up position.

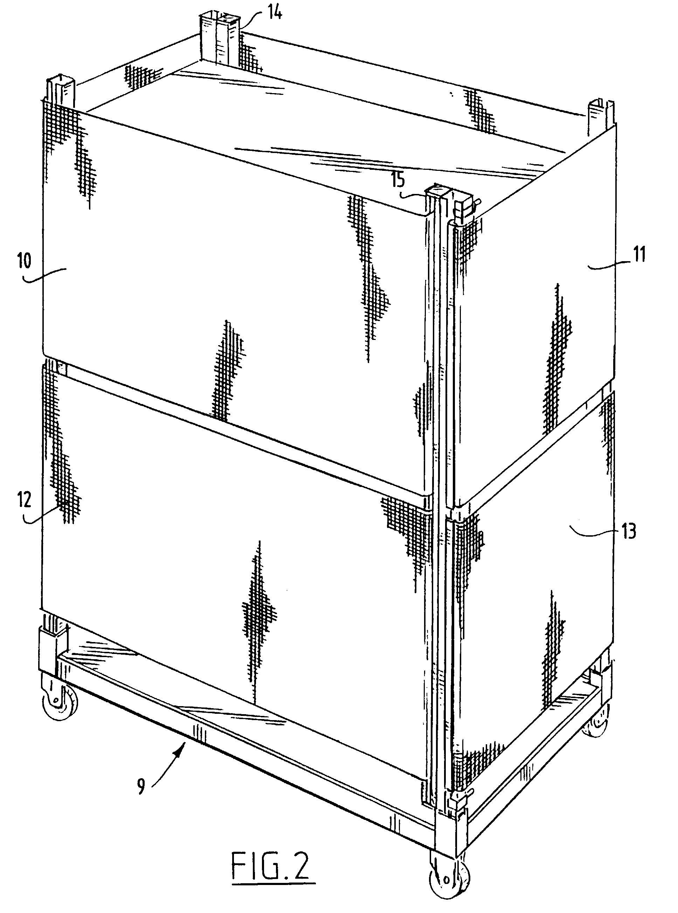

Fig. 2 shows a box-like transport container 9 with four closed screens 10, 11, 12, 13. The tubular profiles 14, 15 accommodating roll-up mechanisms for the screens 10, 11, 12, 13 are mounted on diagonally opposing uprights 4. Screens 10, 12 are fixed to a roll-up mechanism received in the tubular profile 14 and screens 11, 13 are fixed to a roll-up mechanism received in tubular profile 15. Like screens 11, 13, the screens 10, 12 can be opened and closed independently of each other. An advantage of the transport container as shown in this figure is that a part of a side only can be covered or not covered. The material from which the screens 10, 11, 12, 13 is manufactured is preferably so thin that a fully rolled-up screen 10, 11, 12, 13 can be accommodated in a tubular profile 14, 15. The screen material will have to meet particular requirements depending on the application of the screen. Applications in a moist or wet environment are for instance conceivable wherein the screen material must be moistureproof, while other properties of the material are also conceivable, such as being light-transmitting or, conversely, non-transparent, air permeable, capable of accepting print, etc. The special material properties of the screen can give the screens additional functions. An example here is the provision of the screens with advertising messages.

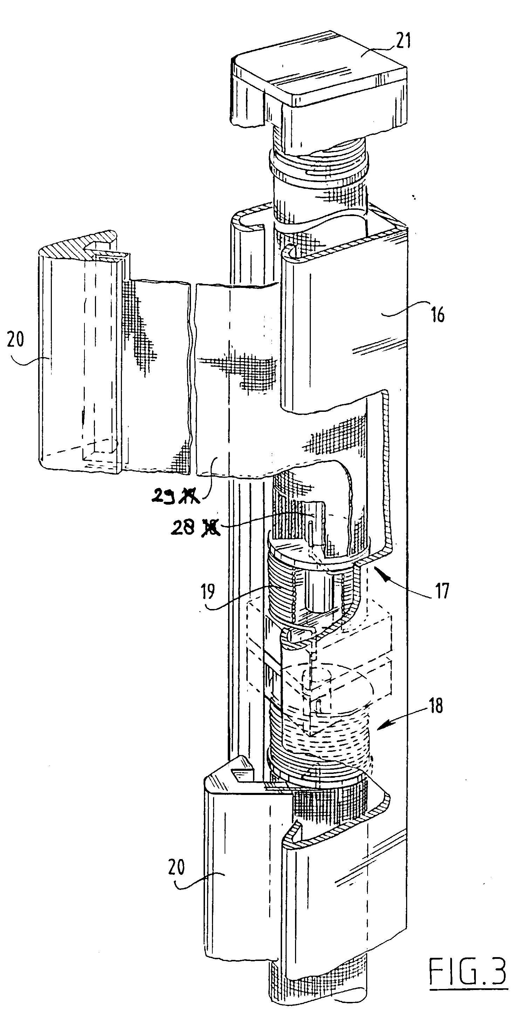

Fig. 3 shows a tubular profile 16 in which are arranged two roll-up mechanisms 17, 18 controllable independently of each other. The screen 29 is rolled onto a core 28. The screen stands under a bias in the direction of the rolled-up situation by means of a spring 19. Such a bias can of course also be arranged in a different manner. The outer end of screen 29 is provided with a strip 20 which prevents the screen 29 disappearing completely into the tubular profile 16 and with which it is further possible to fix screen 29 to an upright of the transport container. The top and bottom of the tubular profile 16 are provided with a stop 21 to prevent the contents of the tubular profile 16 becoming dirty.

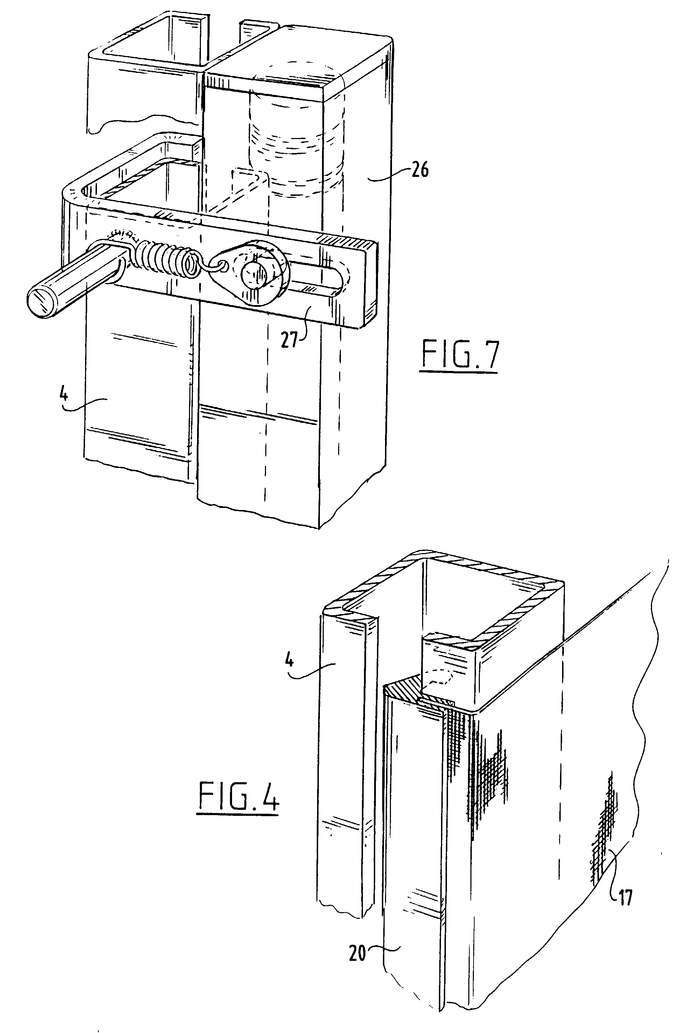

Fig. 4 shows the strip 20 of fig. 3 in a closed position of screen 29. Strip 20 engages on the upright 4 of the transport container (not shown here).

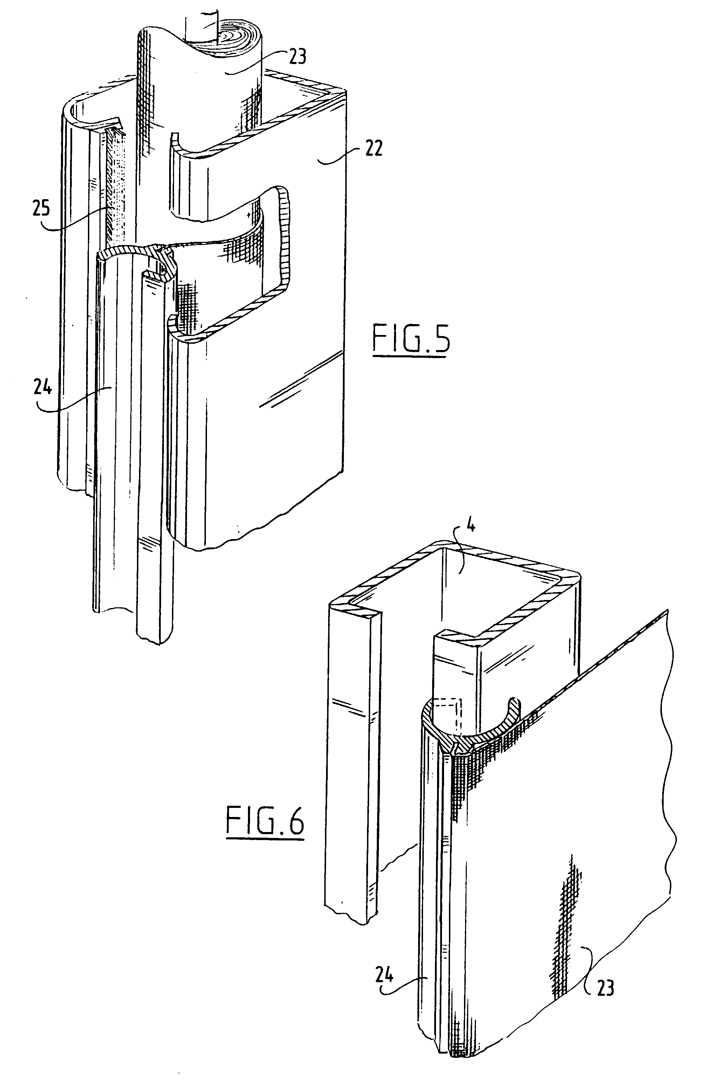

Fig. 5 shows a screen 23 received in a tubular profile 22 and having an alternatively embodied strip 24. The tubular profile 22 is provided with brushes 25 to remove during rolling up of the screen 23 any dirt which may adhere to the screen 23. The strip 24 is formed such that when screen 23 is in the rolled-up state the strip 24 does not protrude outside the periphery of tubular profile 22.

Fig. 6 shows the strip 24 of fig. 5 in the opened state of screen 23. Strip 24 herein engages on an upright 4 of the transport container (not shown).

Fig. 7 shows a bracket 27 which is fixed to the outside of a tubular profile 26 and with which the tubular profile 26 can be mounted detachably to an upright 4 of the transport container.

## Claims

1. Box-like transport container (1, 9) having at least one at least partially open side and flexible covering means comprising a rotatable mechanism (17, 18) and screen material (7, 8, 10, 11, 12, 13, 29, 23), covering an open position, the screen material (7, 8, 10, 11, 12, 13, 23, 29) at least partially leaving free the open side, and a closed position, the screen material (7, 8, 10, 11, 12, 13, 23, 29) at least partially covering the open side, and one side of the screen material (7, 8, 10, 11, 12, 13, 23, 29) being connected with the rotatable mechanism (17, 18) to bias the screen material (7, 8, 10, 11, 12, 13, 23, 29) in the closed position, characterized in that the rotatable mechanism (17, 18) comprises a rotatable core (28) or shaft (28) on which the screen material (7, 8, 10, 11, 12, 13, 23, 29) in the open position is rolled by a bias in the direction of the rolled-up situation of the screen material (7, 8, 10, 11, 12, 13, 23, 29) under which the screen core (28) stands.

2. Box-like transport container (1, 9) as claimed in claim 1, characterized in that the covering means comprise a profile (6, 14, 15, 16, 22, 26) accommodating the rotatable core (28), and, in rolled-up situation, also accommodating at least part of the screen (7, 8, 10, 11, 12, 13, 23, 29) material.

3. Box-like transport container (1, 9) as claimed in claim 1 or 2, characterized in that the covering means are located close to an upright (4) of a transport container (1, 9).

4. Box-like transport container (1, 9) as claimed in any of the foregoing claims, characterized in that the covering means are detachably connectable with an upright (4) of the transport container (1, 9).

5. Box-like transport container (1, 9) as claimed in any of the foregoing claims, characterized in that the rotatable core (28) is placed in a substantial vertical position.

6. Box-like transport container (1, 9) as claimed in any of the claims 1-4, characterized in that the rotatable core (28) is placed in a substantial horizontal position.

7. Box-like transport container (1, 9) as claimed in any of the foregoing claims, characterized in that the screen material (7, 8, 10, 11, 12, 13, 23, 29) is moistureproof.

8. Box-like transport container (1, 9) as claimed in any of the foregoing claims, characterized in that the covering means comprise at least two axially positions independent rotatable cores (28) or shafts (28), each core (28) or shaft (28) connected with a different screen (7, 8, 10, 11, 12, 13, 23, 29).

## Patentansprüche

1. Kastenförmiger Transportbehälter (1, 9) mit wenigstens einer wenigstens teilweise offenen Seitenfront und flexiblen Abschirmmitteln, die einen Drehmechanismus (17, 18) und Abschirmmaterial (7, 8, 10, 11, 12, 13, 29, 23) aufweisen, wobei das Abschirmmaterial (7, 8, 10, 11, 12, 13, 23, 29) in der Öffnungsstellung wenigstens teilweise die offene Seitenfront freilegt und in einer geschlossenen Stellung das Abschirmmaterial (7, 8, 10, 11, 12, 13, 23, 29) wenigstens teilweise die offene Seitenfront bedeckt, wobei ein Rand des Abschirmmaterials (7, 8, 10, 11, 12, 13, 23, 29) mit dem Drehmechanismus (17, 18) verbunden ist, um das Schirmmaterial (7, 8, 10, 11, 12, 13, 23, 29) in die Schließstellung vorzuspannen,
dadurch gekennzeichnet, daß der Drehmechanismus (17, 18) einen drehbaren Kern (28) oder eine drehbare Welle (28) aufweist, auf der das Abschirmmaterial (7, 8, 10, 11, 12, 13, 23, 29) in der Offenstellung durch eine Vorspannung, unter der der Schirmkern (28) steht, in Aufrollrichtung des Schirmmaterials (7, 8, 10, 11, 12, 13, 23, 29) aufgerollt ist.

2. Kastenförmiger Transportbehälter (1, 9) nach Anspruch 1,
dadurch gekennzeichnet, daß die Abdeckmittel ein Profil (6, 14, 15, 16, 22, 26) aufweisen, das dem drehbaren Kern (28) angepaßt ist und in Aufwickelstellung auch wenigstens einen Teil des Schirmmaterials (7, 8, 10, 11, 12, 13, 23, 29) aufnimmt.

3. Kastenförmiger Transportbehälter (1, 9) nach den Ansprüchen 1 oder 2,
dadurch gekennzeichnet, daß die Abdeckmittel dicht benachbart zu einer Ecksäule (4) des Transportbehälters (1, 9) angeordnet sind.

4. Kastenförmiger Transportbehälter (1, 9) nach einem der vorhergehenden Ansprüche,
dadurch gekennzeichnet, daß die Abdeckmittel lösbar mit einer Ecksäule (4) des Transportbehälters (1, 9) verbunden sind.

5. Kastenförmiger Transportbehälter (1, 9) nach einem der vorhergehenden Ansprüche,
dadurch gekennzeichnet, daß der drehbare Kern (28) im wesentlichen vertikal angeordnet ist.

6. Kastenförmiger Transportbehälter (1, 9) nach einem der Ansprüche 1 bis 4,
dadurch gekennzeichnet, daß der drehbare Kern (28) im wesentlichen horizontal angeordnet ist.

7. Kastenförmiger Transportbehälter (1, 9) nach einem der vorhergehenden Ansprüche,
dadurch gekennzeichnet, daß das Abschirmmaterial (7, 8, 10, 11, 12, 13, 23, 29) feuchtigkeitsdicht ausgebildet ist.

8. Kastenförmiger Transportbehälter (1, 9) nach einem der vorhergehenden Ansprüche,
dadurch gekennzeichnet, daß die Abdeckmittel wenigstens zwei axial zueinander angeordnete, unabhängig voneinander drehbare Kerne (28) oder Wellen (28) aufweisen, und daß jeder Kern (28) oder jede Welle (28) mit einem anderen Schirm (7, 8, 10, 11, 12, 13, 23, 29) verbunden ist.

## Revendications

1. Récipient de transport en forme de boîte (1, 9) ayant au moins un côté au moins partiellement ouvert et des moyens de recouvrement souples comportant un mécanisme rotatif (17, 18) et un matériau de protection (7, 8, 10, 11, 12, 13, 29, 23), ayant une position ouverte, le matériau de protection (7, 8, 10, 11, 12, 13, 23, 29) laissant au moins partiellement libre le côté ouvert, et une position fermée, le matériau de protection (7, 8, 10, 11, 12, 13, 23, 29) recouvrant au moins partiellement le côté ouvert, et un côté du matériau de protection (7, 8, 10, 11, 12, 13, 23, 29) étant relié au mécanisme rotatif (17, 18) pour rappeler le matériau de protection (7, 8, 10, 11, 12, 13, 23, 29) dans la position fermée, caractérisé en ce que le mécanisme rotatif (17, 18) comporte un noyau (28) ou un arbre (28) rotatif sur lequel est enroulé le matériau de protection (7, 8, 10, 11, 12, 13, 23, 29) dans la position ouverte par un rappel dans la direction de la position enroulée du matériau de protection (7, 8, 10, 11, 12, 13, 23, 29) sous lequel s'étend le noyau de protection (28).

2. Récipient de transport en forme de boîte (1, 9) selon la revendication 1, caractérisé en ce que les moyens de recouvrement comportent un profilé (6, 14, 15, 16, 22, 26) recevant le noyau rotatif (28), et, dans l'état enroulé, recevant aussi au moins une partie du matériau de protection (7, 8, 10, 11, 12, 13, 23, 29).

3. Récipient de transport en forme de boîte (1, 9) selon la revendication 1 ou 2, caractérisé en ce que les moyens de recouvrement sont positionnés à proximité d'un montant (4) d'un récipient de transport (1, 9).

4. Récipient de transport en forme de boîte (1, 9) selon l'une quelconque des revendications précédentes, caractérisé en ce que les moyens de recouvrement peuvent être reliés de manière détachable à un montant (4) du récipient de transport (1, 9).

5. Récipient de transport en forme de boîte (1, 9) selon l'une quelconque des revendications précédentes, caractérisé en ce que le noyau rotatif (28) est placé dans une position pratiquement verticale.

6. Récipient de transport en forme de boîte (1, 9) selon l'une quelconque des revendications 1 à 4, caractérisé en ce que le noyau rotatif (28) est placé dans une position pratiquement horizontale.

7. Récipient de transport en forme de boîte (1, 9) selon l'une quelconque des revendications précédentes, caractérisé en ce que le matériau de protection (7, 8, 10, 11, 12, 13, 23, 29) est imperméable à l'humidité.

8. Récipient de transport en forme de boîte (1, 9) selon l'une quelconque des revendications précédentes, caractérisé en ce que les moyens de recouvrement comportent au moins deux noyaux ou arbres (28) rotatifs indépendants à positions axiales (28), chaque noyau (28) ou arbre (28) étant relié à un écran différent (7, 8, 10, 11, 12, 13, 23, 29).
